# EUROPEAN PATENT APPLICATION

(11) **EP 3 132 728 A1**
(43) Date of publication of application: **22.02.2017**
(21) Application number: 15191634.3
(22) Date of filing: 27.10.2015
(51) Int. Cl.: A47J 43/07, B01F 7/00, B01F 7/16

(54) **BLENDER BLADE**

(30) Priority: 20.08.2015 CN 201510513521
(71) Applicant: Huiyang Allan Plastics & Electric Industries Co., Limited, Huicheng District Huizhou City Guangdong (CN)
(72) Inventor: Cheung, Shu Sang, Huizhou City (CN)
(74) Representative: Petraz, Gilberto Luigi

(57) **Abstract**

The present invention relates to a blender blade including a blade 1, a blade holder 2 and a connecting shaft 3, the blade 1 being fixed on the blade holder 2 by means of the connecting shaft 3. The blade 1 has at least two sub-blades 4, 5, each sub-blade 4, 5 having a flat cutter body 41, 51. The sub-blades 4, 5 are attached in a way of overlapping two by two up and down. The blender blade 1 of the present invention has intelligent structure, large agitation intensity and little noise and is well-balanced.

## Description

### TECHNICAL FIELD

The present invention relates to a blender, in particular to a blender blade.

### BACKGROUND

A blender blade takes the task of cutting and mixing in the mixing process. The blender blade available nowadays generally includes two kinds of structures. The first kind has a cross-shaped blade comprising a wing root and four blade wings connected with the wing root. Each of the blade wings is bent upward or downward relative to a plane of the wing root, and has a cutting edge for cutting material. Another kind is a linear blade comprising a wing root and two blade wings connected with the wing root. Each blade wing is provided with a cutting edge. The cutting edges may hurt users.

During the stirring process, because some of the material is hard, a blender blade undergoes significant wear after long term use, or even fractures, influencing stirring, and increasing the cost of replacing new blade. In addition, the above two kind of blades have blade wings bending at an angle relative to the plane of the wing root upward or downward to improve the stirring and cutting effect of the material. But due to the blade wings and the horizontal plane form an angle, the balance of the blender blade is poor when stirring hard material, and the stirring and cutting effect is not good, bringing much noise when working. Moreover, in order to ensure that the blade wings bend at a predetermined angle, complexity of the manufacturing process of the tool increases, and it is difficult to ensure the production quality of the blender blade.

The blender blade available nowadays also has the blade wings and the wing roots in the same horizontal plane, but such structure of the blade is relatively simple and has poor stirring and crushing effect.

### SUMMARY OF THE INVENTION

In order to solve the above problems, the invention provides a blender blade with intelligent structure, large agitation intensity, little noise and good balance.

A blender blade comprises a blade, a blade holder and a connecting shaft. The blade is fixed on the blade holder by means of the connecting shaft, and the blade comprises at least two sub-blades. Each sub-blade comprises a flat cutter body. The sub-blades are attached in a way of overlapping two by two up and down.

The present invention provides the sub-blades attached in a way of overlapping two by two up and down, increasing the overall thickness of the blender blade and improving the impact strength between the blade and the material. Thus the present invention makes use of the strike between the blade and the material for stirring and smashing the material without cutting edges on the blade, and stirring strength of material is improved by increasing the overall thickness of the blade, thereby improving stirring and smashing effect. Meanwhile, since the blender blade has no cutter edges on the blade, safety performance is improved, and dangers of cutting users during attachment, detachment or cleaning, etc are avoided. In a further aspect, the flat cutter body is parallel to the horizontal plane without angle, thus the blade manufacturing process is very simple, and makes sure the balance of the blade when working, even though working with hard material, effectively reducing the noise of the blender blade during working.

Preferable, the sub-blade comprises first cutter wings set on at least one end of the cutter body to increase the strike area of the blade and the material, thereby improving stirring and smashing effect of the blender blade to the material.

Preferable, the sub-blade also includes one or more second cutter wings bending and extending from at least one side of the cutter body to increase the strike area of the blade and the material, thereby improving stirring and smashing effect of the blender blade to the material.

Preferable, the sub-blade also includes first cutter wings arranged on at least one end of the cutter body, and one or more second cutter wings bending and extending from at least one side of the cutter body, the first cutter wings extending in directions different from the second cutter wings for assuring the blender blade to impact the material from different directions and increasing the strike area of the blade and the material, whereby the material are stirred and smashed from different directions for better stirring and smashing effect.

Preferable, the second cutter wings of a sub-blade extend towards the orientation of an other subblade overlapped with the sub-blade. Therefore, the second cutter wings of the sub-blade sandwiche the other sub-blade from two sides of the other sub-blade to make the two sub-blades fixed relative to each other, and further to ensure that the two sub-blades are fixed in the relative positions. The two sub-blades overlapped with each other will not shift relative to each other, that is, disengagement is avoided during the blender blade rotates.

Preferable, at least two sub-blades overlapped with each other connect with each other detachably. Since the two overlapped sub-blades are connected detachably, there is no need to replace the two overlapped sub-blades, and only one sub-blade needs to be replaced instead, when one of the two overlapped sub-blades is broken. It reduces the replacement costs and improves the life of the blender blade.

Preferable, at least two sub-blades are formed integrally. Since the two overlapped sub-blades are integral, relative displacement or disengagement is avoided when the two overlapped sub-blades are working. It is more convenient for attachment, detachment or cleaning, etc.

Preferable, the blade includes two sub-blades formed symmetric about a center. It can be understood that an even number of the sub-blades can make the two overlapped sub-blades symmetrical about a center, which can effectively ensure the balance of the two sub-blades and even the blender blade when working.

Preferable, the cutter body is set with a cutting edge for further cutting the material and making the stirring effect better.

Preferable, some or all of the cutter wings are set with cutting edges for further cutting the material and making the mixing and smashing effect better.

The present invention has the following beneficial effects:
1) The two sub-blades have no cutting edge and stir and smash the material by the strike between the blade and the material. The sub-blades are attached in a way of overlapping two by two up and down to increase the overall thickness of the blade to improve the impact strength. Even though the blender blade has no cutter edges, it improves thickness of the blade to increase stirring strength and improve stirring and smashing effect.
2) The blade is set without cutting edge to improve the safety performance and avoid the dangers of cutting users during attachment, detachment or cleaning, etc.
3) The cutter body is set with different directions of cutter wings to ensure that the blade impacts the material in different directions, and therefore stirs and smashes the material in different directions to achieve better stirring and smashing effect.
4) The cutter body is flat and is parallel to the horizontal plane without angle, thus the blade manufacturing process is very simple and makes sure the balance of the blade when working, even though stirring hard material, thereby reducing the noise of the blender blade when working.
5) Preferable, the cutter body and/or the cutter wings are set with cutting edges for further cutting the material and making the mixing effect better.

### BRIEF DESCRIPTION OF THE DRAWINGS

FIG.1 is a dimensional diagram of the blender blade of embodiment 1.
FIG.2 is an explosion diagram of the blender blade of Figure 1.
FIG.3 is an assembled view of the blender blade with a blade holder of the embodiment 1.
FIG.4 is a dimensional diagram of the blender blade of embodiment 2.
FIG.5 is a dimensional diagram of the blender blade of embodiment 3.
FIG.6 is a dimensional diagram of the blender blade of embodiment 4.

### DETAILED DESCRIPTION OF THE INVENTION

For better understanding of the technical solutions of the invention for those skilled in the art, the structure and principle of the invention are further described with reference to the appended drawings and embodiments.

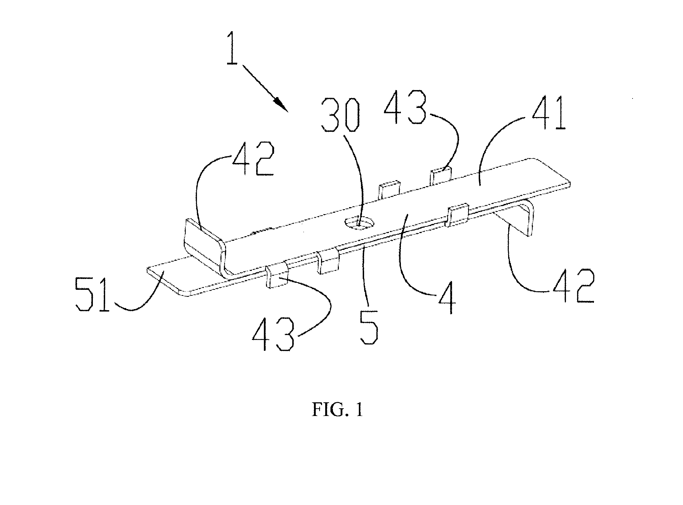

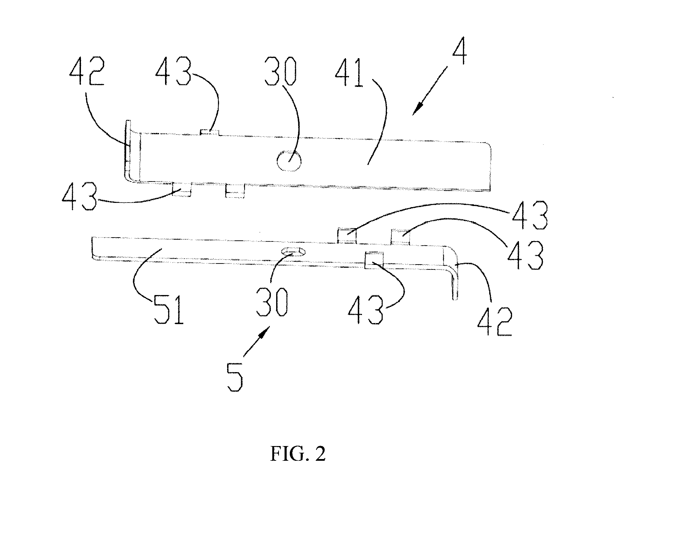

As shown in Figure 1 to Figure 3, the blender blade of the present invention is applied to the blender, the blender blade comprising a blade 1, a blade holder 2 and a connecting shaft 3. The blade 1 is fixed on the blade holder 2 by means of the connecting shaft 3.

The blade comprises at least two sub-blades. Each sub-blade comprises a flat cutter body. The sub-blades are attached in a way of overlapping two by two up and down. Preferable, the sub-blade number is an even number, and two overlapped sub-blades are formed symmetric about a center. Each sub-blade defines a connecting hole 30. The connecting shaft 3 goes through the connecting holes 30 of all the sub-blades, so that the blade 1 is attached to the blade holder 2.

### Embodiment 1:

As shown in Figure 1 to Figure 3, the blade 1 of the blender blade includes two sub-blades which are respectively designated as the first sub-blade 4 and the second sub-blade 5. The first sub-blade 4 includes the first cutter body 41. The second sub blade 5 includes the second cutter body 51. Both of the first cutter body 41 and the second cutter body 51 are flat and linear. Both of the cutter bodies of the first sub blade 4 and the second sub blade 5 are flat and parallel to the horizontal plane without angle, thus the blade manufacturing process is very simple, and makes sure the balance of the blade when working, even working with hard material, effectively reducing the noise.

The first sub blade 4 and the second sub blade 5 rotate at high speed to stir and crush the material by collision between the first sub blade 4 and the second sub blade 5 and the material. The first cutter body 41 and the second cutter body 51 are attached with each other in a way of overlapping two by two up and down. Preferable, the first cutter body 41 and the second cutter body 51 are overlapped detachably. The first cutter body 41 and the second cutter body 51 are overlapped up and down to increase the overall thickness of the blade and improve the impact strength between the blade and the material. Thus the present invention increases thickness of the blade to improve the stirring strength between the blade and the material without cutting edge, and therefore improves the mixing and smashing effect of the blender blade to the material, thereby mixing the material more evenly.

Each cutter body of the first sub blade 4 and the second sub blade 5 has one or more cutter wings. Preferable, the first sub blade 4 and the second sub blade 5 are formed symmetric about centers of the connecting holes 30. Thus it ensures that the blender blade can maintain the balance effectively when rotating at the high speed. Therefore, merely the structure of the first sub blade 4, instead of the second sub blade 5, is described in detail here.

The cutter wings of the first sub-blade 4 include the first cutter wings 42 arranged on at least one end of the first cutter body 41. Preferable, the first cutter wings 42 bend from one end of the first cutter body 41 in a direction towards far from the second cutter body 51. The first cutter wings 42 and the first cutter body 41 are formed at a certain angle. Preferable, the first cutter wings 42 and the first cutter body 41 are formed at about 90 degree. In Figure 1 to Figure 3, the first cutter wings 42 are just formed at one end of the first cutter body 41. It can be understood that the first cutter wings can be formed at two ends of the first cutter body at the same time. The bending direction of the first cutter wings on the two ends of the first cutter body can be different. The angles between the first cutter wings and the first cutter body can be different, too.

The cutter wings of the first sub-blade 4 also include one or more second cutter wings 43 set on one or more side of the first cutter body 41. Preferable, the second cutter wings 43 extend at two sides of the first cutter body 41 in direction towards the second cutter body 51. Therefore, the second cutter wings 43 sandwich the second cutter body 51 from two sides of the second cutter body 51 to make the two cutter bodies fixed relative to each other, and further to ensure that the two cutter body are fixed in the relative position. In this embodiment, a second cutter wing 43 is formed at one side of the first cutter body 41, and two second cutter wings 43 are formed at the other side of the first cutter body 41. Since both sides of the cutter body are clamped by the second cutter wings of the other cutter body, the two overlapped sub-blades will not displace relative to each other, that is, disengagement is avoided when working.

The first cutter wings 42 and the second cutter wings 43 don't have any cutter edge. The first cutter wings and the second cutter wings strike the material in different directions to further strengthen the mixing and smashing of the material. The cutter body has cutter wings in different directions to impact the material from different directions for stirring and smashing the material in different directions, thereby improving mixing and smashing effect.

Since the blade has no cutting edge, it improves the safety performance and avoids the dangers of cutting users during attachment, detachment or cleaning, etc.

### Embodiment 2:

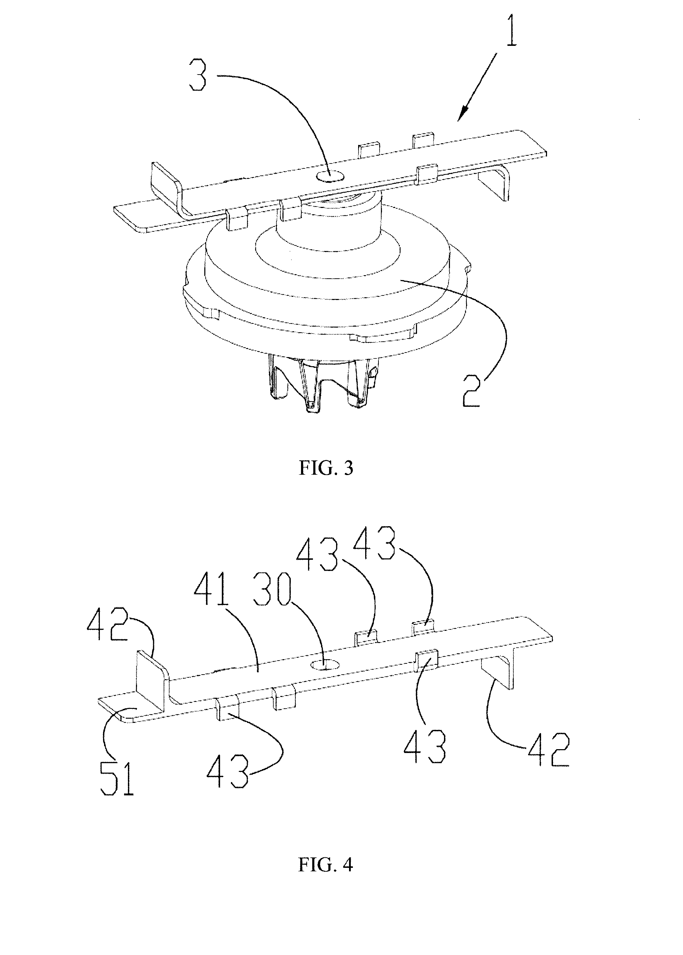

As shown in Figure 4, the structure of the blender blade in this embodiment is similar to that of the embodiment 1. The difference is the connecting type between the first sub-blade 4 and the second sub-blade 5. In the embodiment 1, the first sub-blade 4 and the second sub-blade 5 are two independent blades separately formed respectively and overlapped with each other up and down, and are connected to the blade holder 2 with the connecting shaft 3. But in the embodiment 2, the first sub blade 4 and the second sub blade 5 are formed integrally by fine casting techniques, fusing techniques, numerical control machine tool processing art or a 3D printing technique. The structure of the first sub blade 4 and the second sub blade 5 in this embodiment is the same with the embodiment 1, so there are no needs to describe again in detail. Disengaging and shifting is avoided when working since the two overlapped sub-blades are integral. It is more convenient for attachment, detachment or cleaning, etc.

In this embodiment, the blender blade has no cutting edge, and has two overlapped and integral sub-blades for increasing overall thickness of the blade to improve the strike strength between the blade and the material for stirring and smashing the material better. Since the blender blade has no cutting edge, it has high safety performance and avoids the dangers of cutting users during attachment, detachment or cleaning, etc. The two integral sub-blades are substantially flat and parallel to the horizontal plane without angle, which makes sure the balance of the blade when working. The blender blade is well-balanced when working even though with hard material, and reduces the noise effectively when working.

### Embodiment 3:

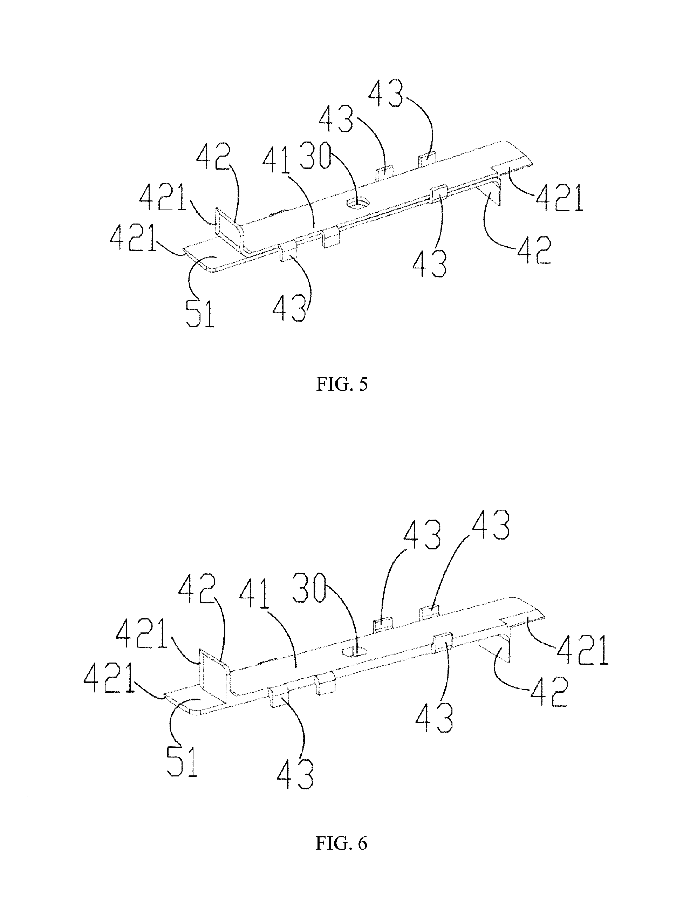

As shown in Figure 5, the structure of the blender blade in this embodiment is similar to that of the embodiment 1. The difference is the sub-blades have cutter edges. In the embodiment 1, the first sub-blade 4 and the second sub-blade 5 have no cutter edge, and the two sub-blades and cutter wings strike the material for blending and milling the material. While in the embodiment 3, the first sub-blade 4 and the second sub-blade 5 both have cutter edge. In this embodiment, the first sub-blade 4 and the second sub-blade 5 are still formed symmetric about centers of the connecting holes 30. Thus it makes sure to maintain the balance of the blender blade when rotating at high speed. Only the structure of the first sub-blade instead of the second sub-blade is described here.

At least one end of the first cutter body 41 of the first sub-blade 4 is bent to form the first cutter wing 42. A first cutter edge 421 is set at one side of the first cutter wing 42. If the first sub blade 4 forms the first cutter wing 42 at only one end, the first sub blade 4 forms a second cutter edge 421 at the other end thereof. The blade has cutting edges for further cutting the material and making the cutting and mixing effect better.

It can be understood that, the cutter edge is only provided on the cutter body or just on at least one cutter wing, which also can improve the effect of blending and milling.

### Embodiment 4:

As shown in Figure 6, the structure of the blender blade in this embodiment is similar to that of the embodiment 3. The difference is the connecting type between the first sub blade 4 and the second sub blade 5. In the embodiment 3, the first sub-blade 4 and the second sub-blade 5 are two independent blades separately formed respectively and overlapped with each other up and down, and are fixedly connected to the blade holder 2 with the connecting shaft 3. But in the embodiment 4, the first sub-blade 4 and the second sub-blade 5 are formed integrally by fine casting techniques, fusing techniques, numerical control machine tool processing art or a 3D printing technique. The structure of the first sub-blade 4 and the second sub-blade 5 in this embodiment is the same with the embodiment 3, and the first sub-blade 4 and the second sub-blade 5 are both set with cutter edge, so there are no needs to describe again in detail. The two sub-blades are integral, avoiding disengaging and shifting phenomenon when working. It is more convenient for attachment, detachment or cleaning, etc.

### Embodiment 5:

Comparing to the embodiment 1, the difference of the blender blade in this embodiment is that the first cutter body of the first sub-blade and the second cutter body of the second sub-blade are cross-shaped. The first cutter body and the second cutter body are attached closely in a way of overlapping two by two up and down to increase the overall thickness of the blade and to improve the impact strength of the blender blade and the material. The first cutter body and the second cutter body are cross-shaped, increasing the strike area and strike locations of the blade and the material, and thereby further improving stirring and smashing strength to the material. The blender blade has no cutting edge, which ensures high safety performance and avoids the dangers of cutting users during attachment, detachment or cleaning, etc.

It can be understood that, the first cutter body and the second cutter body can also form three branches extending outwardly. The first cutter body and the second cutter body are attached and overlapped up and down to increase the overall thickness of the blade. The first cutter body and the second cutter body are set with cutter wings to improve the mixing and smashing strength.

Preferable, the first cutter body and the second cutter body form at least four blade branches, which also can have high stirring strength, low noise and good balance.

Preferable, the blender blade can also include three blades which are stacked with each other. The middle blade is flat without cutter edge, and the other two blades are set with cutter edges to improve the stirring intensity.

In general, the blender blade of the present invention has intelligent structure, large agitation intensity and little noise and is well-balanced.

The above preferred embodiments describe the present invention, and it should be noted that, without deviating from the spirit and essential of the present invention, a person skilled in the art is able to make various corresponding changes and modifications according to the present invention, but these respective changes and modifications should also fall within the protecting scope of the present invention.

## Claims

1. A blender blade comprising a blade (1), a blade holder (2) and a connecting shaft (3), the blade (1) being fixed on the blade holder (2) by means of the connecting shaft (3), the blade (1) **characterized in that** it comprises at least two sub-blades (4,5), each sub-blade (4,5) comprising a flat cutter body (41,51), wherein the sub-blades (4,5) are attached in a way of overlapping two by two up and down.

2. The blender blade of Claim 1, wherein the sub-blade (4,5) comprises a first cutter wing set (42) on at least one end of the cutter body (41,51).

3. The blender blade of Claim 1, wherein the sub-blade (4,5) includes one or more second cutter wings (43) bending and extending from at least one side of the cutter body (41,51).

4. The blender blade of Claim 1, wherein the sub-blade (4,5) includes first cutter wings (42) arranged on at least one end of the cutter body (41,51), and one or more second cutter wings (43) bending and extending from at least one side of the cutter body (41,51), the first cutter wings (42) extending in directions different from the second cutter wings (43).

5. The blender blade of Claim 4, wherein the second cutter wings (43) of a sub-blade (4,5) extend towards orientation of an other sub-blade (4,5) overlapped with the sub-blade.

6. The blender blade of any one of Claim 1-5, wherein the at least two overlapped sub-blades (4,5) connect with each other detachably.

7. The blender blade of any one of Claim 1-5, wherein the at least two sub-blades (4,5) are formed integrally.

8. The blender blade of any one of Claim 1-5, wherein the blade (1) includes two sub-blades (4,5) formed symmetric about a center.

9. The blender blade of any one of Claim 1-5, wherein a cutting edge (421) is formed on the cutter body.

10. The blender blade of any one of Claim 1-5, wherein some or all of the cutter wings have cutting edges (421).
